# EUROPEAN PATENT APPLICATION

(11) **EP 2 594 827 A2**
(43) Date of publication of application: **22.05.2013**
(21) Application number: 12192524.2
(22) Date of filing: 14.11.2012
(51) Int. Cl.: F16H 61/32

(54) **Electric actuator**

(30) Priority: 15.11.2011 JP 2011249539
(71) Applicant: JTEKT CORPORATION, Osaka-shi Osaka 542-8502 (JP)
(72) Inventor: Yukitake, Yasuhiro, Osaka-shi,, Osaka 542-8502 (JP)
(74) Representative: Winter, Brandl, Fürniss, Hübner, Röss, Kaiser, Polte - Partnerschaft

(57) **Abstract**

An electric actuator (21) includes: a housing (22) that accommodates a shift select shaft; an electric motor (23) that generates rotational driving force; a select conversion mechanism (25) and a shift conversion mechanism (24) that transmit the rotational driving force to the shift select shaft (15); a select electromagnetic clutch (56) that allows or interrupts transmission of the rotational driving force to the select conversion mechanism; a shift electromagnetic clutch (43) that allows or interrupts transmission of the rotational driving force to the shift conversion mechanism; and a clutch casing that is accommodated in the housing and that accommodates the select electromagnetic clutch and the shift electromagnetic clutch. A seal member (151) (O-rings and sealed bearings) for shutting off an inside and an outside of the clutch casing (140) from each other is provided in the housing.

## Description

### BACKGROUND OF THE INVENTION

### 1. Field of the Invention

The invention relates to an electric actuator that is used to perform gear shift operations, such as a select operation and a shift operation, to shift the position of a shift gear of a transmission.

### 2. Description of Related Art

There is a conventional gear-shifting apparatus of an automated manual transmission that is a manual transmission in which gearshift is performed without depressing a clutch pedal. The gear-shifting apparatus includes a transmission and an electric actuator. The transmission accommodates a shift gear, and the like. The electric actuator is used to drive the transmission so that the transmission shift gears. Japanese Patent Application Publication No. 2011-75097 (JP 2011-75097 A) describes a shift/select actuating device as an example of the electric actuator. The shift/select actuating device includes, for example, an electric motor. The shift/select actuating device slides a shift select shaft in its axial direction by the driving force of the electric motor to perform a select operation, or rotates the shift select shaft about its axis by rotational driving force of the electric motor to perform a shift operation.

The shift/select actuating device includes a first conversion mechanism, a second conversion mechanism, a first electromagnetic clutch and a second electromagnetic clutch. The first conversion mechanism converts the driving force of the electric motor into force for rotating the shift select shaft. The second conversion mechanism converts the driving force into force for sliding the shift select shaft. The first electromagnetic clutch transmits or interrupts transmission of the driving force to the first conversion mechanism. The second electromagnetic clutch transmits or interrupts transmission of the driving force to the second conversion mechanism.

Lubricant for lubricating the shift gear is present in a transmission that is driven by the shift/select actuating device described in JP 2011-75097 A to shift gears. If the lubricant enters the first electromagnetic clutch and second electromagnetic clutch of the shift/select actuating device, the electromagnetic clutches may slip and the efficiency of transmitting the driving force via the electromagnetic clutches may be reduced. Therefore, in order to prevent the lubricant of the transmission from reaching the shift/select actuating device, a packing may be fitted onto the shift select shaft (near a portion exposed on the outside of the shift/select actuating device) to block the lubricant using the packing. However, with this configuration, losses may be caused in the movement (rotation and slide) of the shift select shaft due to the sliding resistance between the packing and the shift select shaft and extra driving electric power of the electric motor may be required accordingly. In order to reduce the sliding resistance in this configuration, it is necessary to apply advanced surface treatment (heat treatment, grinding, or the like) to a portion of the shift select shaft, which contacts the packing. This leads to an increase in cost.

### SUMMARY OF THE INVENTION

It is an object of the invention to provide an electric actuator with which entry of lubricant into an electromagnetic clutch is prevented at low cost.

An aspect of the invention relates to an electric actuator that slides a shift select shaft to which a shift lever is coupled in an axial direction of the shift select shaft to cause the shift lever to perform a select operation, and that rotates the shift select shaft about an axis of the shift select shaft to cause the shift lever to perform a shift operation. The electric actuator includes: a housing that accommodates the shift select shaft; an electric motor that is provided on the housing, and that generates rotational driving force; a select conversion mechanism that is accommodated in the housing, and that converts the rotational driving force into force for sliding the shift select shaft in the axial direction and then transmits the force to the shift select shaft; a shift conversion mechanism that is accommodated in the housing, and that converts the rotational driving force into force for rotating the shift select shaft about the axis and then transmits the force to the shift select shaft; a select electromagnetic clutch that allows or interrupts transmission of the rotational driving force from the electric motor to the select conversion mechanism; a shift electromagnetic clutch that allows or interrupts transmission of the rotational driving force from the electric motor to the shift conversion mechanism; a clutch casing that is accommodated in the housing and that accommodates the select electromagnetic clutch and the shift electromagnetic clutch; and a seal member that is provided in the housing, and that shuts off an inside and an outside of the clutch casing from each other.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is an exploded perspective view that shows the schematic configuration of a gear-shifting apparatus to which an electric actuator according to an embodiment of the invention is applied;
FIG. 2 is a perspective view that shows the configuration of a transmission actuating device in the gear-shifting apparatus shown in FIG. 1;
FIG. 3 is a bottom view that shows the configuration of the transmission actuating device;
FIG. 4 is a sectional view that shows the configuration of the transmission actuating device; and
FIG. 5 is a sectional view that is taken along the line A-A in FIG. 4.

### DETAILED DESCRIPTION OF EMBODIMENTS

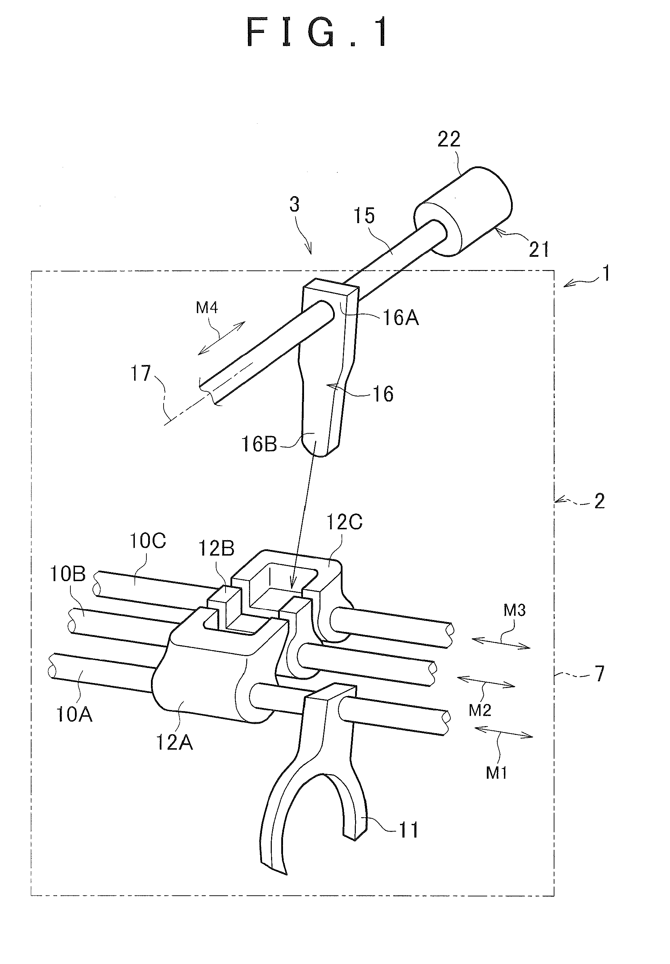

Hereinafter, an embodiment of the invention will be described in detail with reference to the accompanying drawings. FIG. 1 is an exploded perspective view that shows the schematic configuration of a gear-shifting apparatus 1 to which an electric actuator according to an embodiment of the invention is applied. The gear-shifting apparatus 1 includes a transmission 2 and a transmission actuating device 3 that drives the transmission 2 to shift gears. The transmission 2 is a known constant-mesh parallel-shaft transmission, and is mounted in a vehicle, for example, a passenger automobile or a truck. The transmission 2 includes a gear housing 7 and constant-mesh parallel-shaft gear shift mechanism (not shown) that is accommodated in the gear housing 7.

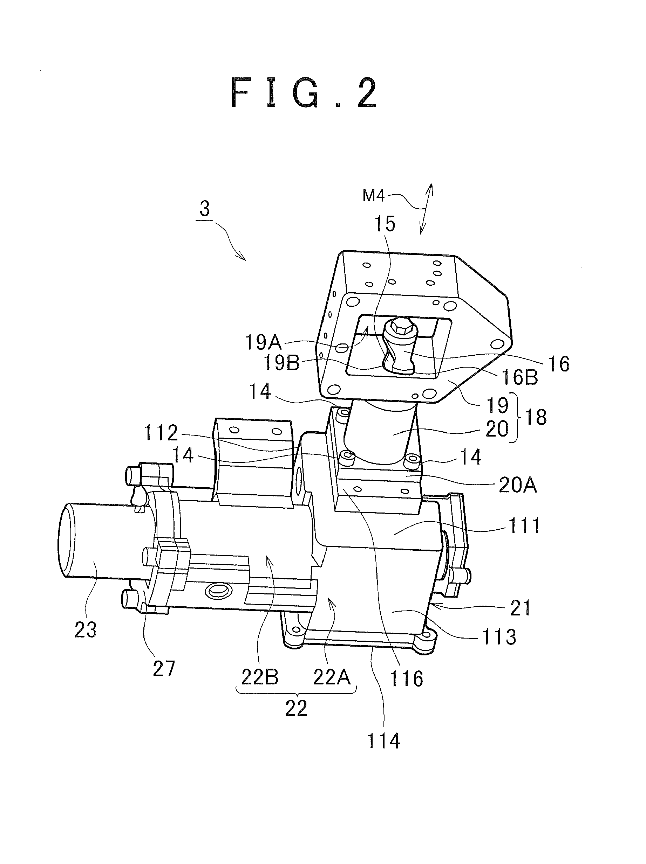

The transmission actuating device 3 includes a shift select shaft 15 and the electric actuator 21. The shift select shaft 15 causes the shift mechanism to perform a shift operation or a select operation. The electric actuator 21 is used as a common driving source for causing the shift select shaft 15 to perform a shift operation or a select operation. Note that FIG. 1 is a simplified view of members, and the detailed configuration of the members (particularly, the electric actuator 21) is shown in FIG. 2 and the following drawings (described later).

The shift select shaft 15 is a columnar member that is long in a predetermined direction (direction M4 shown in the drawing). A base end 16A of a shift lever 16, which is accommodated in the gear housing 7, is coupled to a middle portion of the shift select shaft 15. The shift lever 16 rotates together with the shift select shaft 15 about a central axis 17 of the shift select shaft 15. The distal end side (right side in FIG. 1) of the shift select shaft 15 protrudes outward from the gear housing 7. The shift lever 16 performs an actual shift operation or an actual select operation as the shift select shaft 15 rotates about its axis or slides in the axial direction M4. The electric actuator 21 rotates the shift select shaft 15 to cause the shift lever 16 to perform a shift operation, and slides the shift select shaft 15 to cause the shift lever 16 to perform a select operation (described later in detail).

A plurality of shift rods 10A, 10B, 10C, which extend parallel to each other, is accommodated in the gear housing 7. Shift blocks 12A, 12B, 12C, which are engageable with a distal end 16B of the shift lever 16, are fixed to the shift rods 10A, 10B, 10C, respectively. Each of the shift rods 10A, 10B, 10C is provided with a shift fork 11 that engages with a corresponding clutch sleeve (not shown). Note that, in FIG. 1, only the shift fork 11 provided on the shift rod 10A is shown.

When the shift select shaft 15 is moved (slid) in the axial direction M4 by the electric actuator 21, the shift lever 16 is moved in the axial direction M4. As a result, the distal end 16B of the shift lever 16 selectively engages with one of the shift blocks 12A, 12B, 12C. In this way, a select operation is completed. On the other hand, when the shift select shaft 15 is rotated about the central axis 17 by the electric actuator 21, the shift lever 16 pivots about the central axis 17. As a result, one of the shift blocks 12A, 12B, 12C, which is engaged with the shift lever 16, moves in a corresponding one of axial directions M1, M2, M3 of the shift rods 10A, 10B, 10C. In this way, a shift operation is completed. Note that the rotation angle of the shift select shaft 15, which is required to perform a shift operation, is considerably smaller than 360° (one-turn rotation of the shift select shaft 15) (for example, approximately 120°).

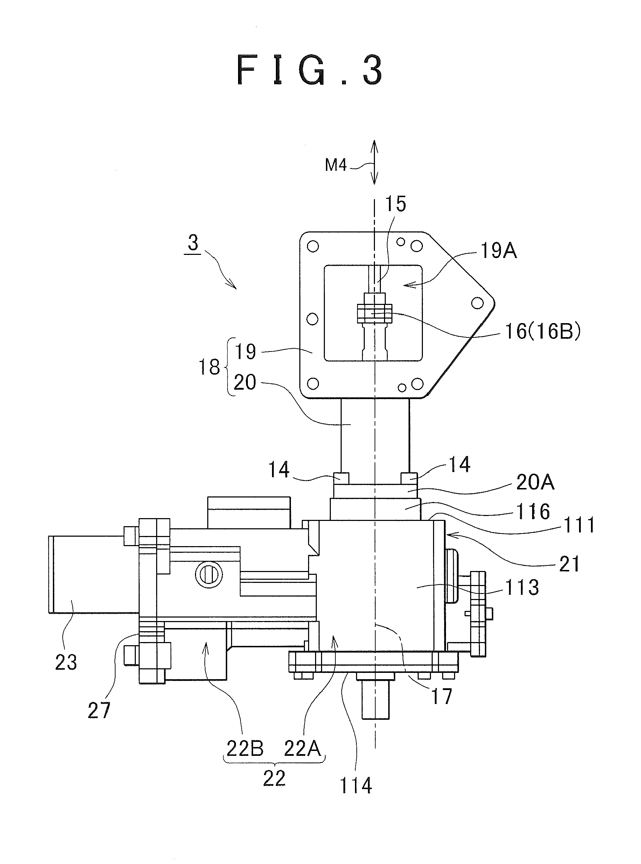

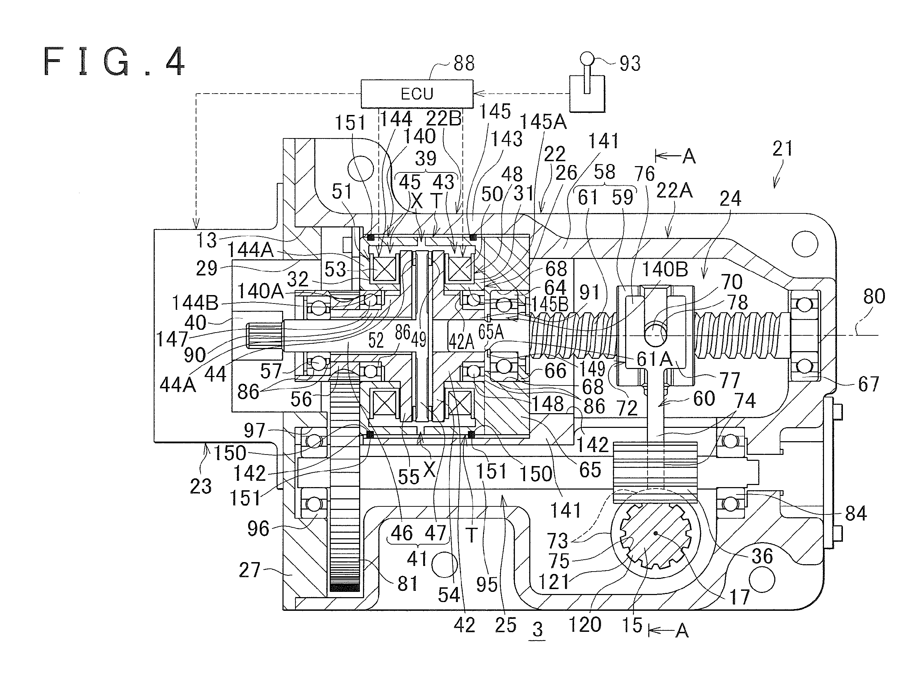

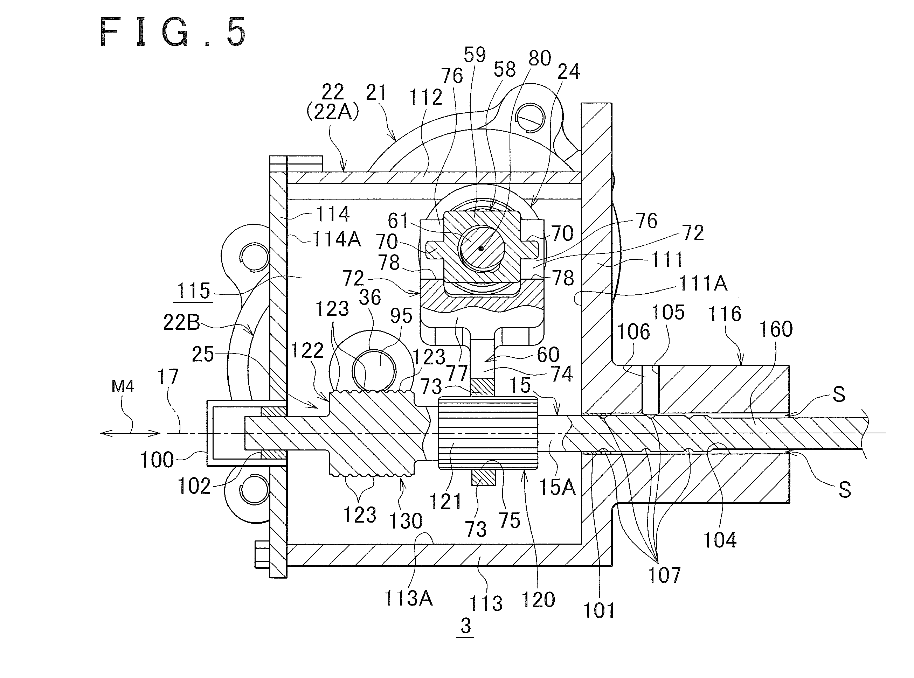

FIG. 2 is a perspective view that shows the configuration of the transmission actuating device in the gear-shifting apparatus shown in FIG. 1. FIG. 3 is a bottom view that shows the configuration of the transmission actuating device. FIG. 4 is a sectional view that shows the configuration of the transmission actuating device. FIG. 5 is a sectional view that is taken along the line A-A in FIG. 4. Hereinafter, the configuration of the electric actuator 21 will be described with reference to FIG. 2 to FIG. 5. As shown in FIG. 4, the electric actuator 21 includes a box-shaped housing 22 that forms the contour of the electric actuator 21 and that accommodates the shift select shaft 15, and the like. The electric actuator 21 is fixed to the outer surface of the gear housing 7 (see FIG. 1).

Specifically, the electric actuator 21 includes a mounting stay 18 shown in FIG. 2, in addition to the housing 22. The mounting stay 18 includes a body portion 19 and an extended portion 20 that are formed integrally with each other. The body portion 19 has a block shape (also see FIG. 3) having a home-base-shaped (substantially pentagon-shaped) profile in plan view (bottom view). A recessed hollow portion 19A having a rectangular shape in plan view is formed in one side face of the body portion 19.

The extended portion 20 is a circular tube shape, and extends from the body portion 19 toward the housing 22. A flange 20A is integrally formed with an end portion of the extended portion 20, which is on the housing 22 side (lower side in FIG. 3). The flange 20A projects in the radial direction of the extended portion 20. The profile of the flange 20A as viewed from the direction in which the extended portion 20 extends is a substantially rectangular shape. In a state where the flange 20A contacts the housing 22, a plurality of (four, in the present embodiment) common bolts 14 are fitted to the flange 20A (four corners) and the housing 22. In this way, the mounting stay 18 is fixed to the housing 22.

As viewed from the direction in which the extended portion 20 extends, a circular insertion hole 19B is formed at a portion of the body portion 19, which corresponds to the center of the hollow portion of the extended portion 20. The insertion hole 19B extends through the body portion 19 and communicates with the hollow portion 19A. In FIG. 2, the insertion hole 19B is formed in the body portion 19 at a portion on the extended portion 20 side. In the mounting stay 18, the body portion 19 is fitted to the gear housing 7 (see FIG. 1) with bolts (not shown). As a result, the electric actuator 21 (in other words, the entirety of the transmission actuating device 3) is fixed to the outer surface of the gear housing 7. In this state, a portion of the shift select shaft 15, which is on the shift lever 16 side, is exposed on the outside of the housing 22. The portion of the shift select shaft 15, which is exposed on the outside of the housing 22, is arranged inside the extended portion 20 and in the hollow portion 19A of the body portion 19. In this state, the portion is passed through the insertion hole 19B of the body portion 19, and is exposed to the outside from the hollow portion 19A of the body portion 19. The shift lever 16 is arranged in the hollow portion 19A of the body portion 19, and located outside the housing 22. The distal end 16B of the shift lever 16 extends from the hollow portion 19A to the outside of the body portion 19, and engages with one of the above-described shift blocks 12A, 12B, 12C (see FIG. 1).

As shown in FIG. 4, the electric actuator 21 includes an electric motor 23, a shift conversion mechanism 24, a select conversion mechanism 25 and a switching unit 26. The electric motor 23 is formed of, for example, a brushless motor, and is used to generate rotational driving force. The shift conversion mechanism 24 is used to convert the rotary torque (rotational driving force) of the electric motor 23 into force that rotates the shift select shaft 15 about the central axis 17 (about its axis) and then transmit the force to the shift select shaft 15. The select conversion mechanism 25 is used to convert the rotary torque of the electric motor 23 into force that moves (slides) the shift select shaft 15 in its axial direction M4 (direction perpendicular to the sheet on which FIG. 4 is drawn) and then transmit the force to the shift select shaft 15. The switching unit 26 is used to switch the destination, to which the rotational driving force of the electric motor 23 is transmitted, between the shift conversion mechanism 24 and the select conversion mechanism 25. The electric motor 23 is attached to the housing 22 and arranged outside the housing 22. The shift conversion mechanism 24, the select conversion mechanism 25 and the switching unit 26 are accommodated in the housing 22.

A motor opening portion 13 is formed in the housing 22 at a portion on the electric motor 23 side (left side in FIG. 4). The motor opening portion 13 is closed by a substantially plate-shaped lid 27. The lid 27 is part of the housing 22. The housing 22 and the lid 27 each are made of a metal material, such as casting iron or aluminum. The outer periphery of the lid 27 is fitted to the motor opening portion 13 of the housing 22. A circular through-hole 29 is formed in the lid 27. The through-hole 29 extends through the lid 27 from the inner surface (right surface shown in FIG. 4) to the outer surface (left surface shown in FIG. 4). In addition, a body casing of the electric motor 23 is fixed to the outer surface of the lid 27. The electric motor 23 is provided so as to be rotatable in forward and reverse directions. For example, a brushless motor is employed as the electric motor 23. The body casing of the electric motor 23 is attached to the housing 22 so as to be exposed on the outside of the housing 22. An output shaft 40 of the electric motor 23 is arranged so as to be neither parallel to nor intersecting with the shift select shaft 15 such that, when viewed in a plan view (when viewed from above in FIG. 4), the output shaft 40 and the shift select shaft 15 form an angle of 90 degrees. Therefore, the output shaft 40 extends in a predetermined direction (lateral direction in FIG. 4) which is perpendicular to the axial direction M4. The output shaft 40 faces the inside the housing 22 via the through-hole 29 of the lid 27, and faces the switching unit 26.

The housing 22 has a box shape as described above. The housing 22 mainly accommodates a distal end side (right side in FIG. 1) portion of the shift select shaft 15 and components of the shift conversion mechanism 24, the select conversion mechanism 25 and the switching unit 26. More specifically, as shown in FIG. 5, the housing 22 has a box shape having a bottom at one side (right side in FIG. 5). The housing 22 mainly includes a bottom wall 111 and a pair of side walls 112, 113. The side walls 112, 113 are respectively extend upright from one end portion (upper end portion in FIG. 5) and the other end portion (lower end portion in FIG. 5) of the bottom wall 111 so as to be parallel to each other. An opening portion 115 is formed in the housing 22. The opening portion 115 is defined by, for example, the distal end portions (left end portions shown in FIG. 5) of the side walls 112, 113. The opening portion 115 is closed by a flat-plate-shaped lid 114. The lid 114 forms part of the housing 22. A portion of the lid 114, which is exposed to the inside of the housing 22, is an inner side surface 114A.

As shown in FIG. 5, a bottom face 111A, which is an inner face of the bottom wall 111, is formed of a flat surface. A shaft holder 116 is formed on the bottom wall 111. The shaft holder 116 is used to support a middle portion (a portion closer to a base end (right end in FIG. 5) than a spline portion 120 and a rack portion 122 (described later)) of the shift select shaft 15. The shaft holder 116 is integrally formed with the bottom wall 111. The shaft holder 116 projects outward from the outer wall surface (the surface on the opposite side of the bottom wall 111 from the bottom face 111A) of the bottom wall 111, and has, for example, a rectangular parallelepiped shape (also see FIG. 2). The flange 20A of the above-described mounting stay 18 is fixed to the shaft holder 116 with the bolts 14 (see FIG. 2). A circular passage hole 104 (circular in cross section) is formed in the bottom wall 111 and the shaft holder 116. The passage hole 104 extends through the shaft holder 116 and the bottom wall 111 in their thickness directions (lateral direction in FIG. 5, and a direction perpendicular to the bottom face 111A). The shift select shaft 15 is passed through the passage hole 104. The passage hole 104 is slightly larger in diameter than the shift select shaft 15 (portion that plugs the passage hole 104). Therefore, in the bottom wall 111 and the shaft holder 116, a clearance S is formed between an inner periphery that defines the passage hole 104 and the outer periphery of the shift select shaft 15. The clearance S provides communication between the inside and outside of the housing 22.

A plain bearing 101 is fixedly fitted to the inner periphery of the passage hole 104. The plain bearing 101 surrounds the outer periphery of the middle portion of the shift select shaft 15 (plugging portion 160, described later) that is passed through the passage hole 104, and supports the outer periphery of the plugging portion 160 of the shift select shaft 15 so as to be in sliding contact with the outer periphery of the plugging portion 160 of the shift select shaft 15. A lock pole 106 is arranged in the middle of the shaft holder 116 in the thickness direction (lateral direction in FIG. 5). Specifically, the lock pole 106 is accommodated in a through-hole 105 that extends through the shaft holder 116 from the inner periphery of the shaft holder 116, which defines the passage hole 104, to the outer periphery of the shaft holder 116. The lock pole 106 has a substantially cylindrical shape that extends in a direction perpendicular to the central axis (that is, the central axis 17 of the shift select shaft 15) of the passage hole 104, and is provided so as to be movable in this direction. The distal end portion of the lock pole 106 has a semi-spherical shape, and engages with one of engaging grooves 107 described below.

A portion of the shift select shaft 15, which plugs the passage hole 104 (portion at a position that corresponds to the passage hole 104 in the axial direction M4) is referred to as the plugging portion 160. The plugging portion 160 is a cylindrical member that is coaxially integrated with the shift select shaft 15, and is arranged at a position at which the plugging portion 160 plugs the passage hole 104. A plurality of (for example, three) the engaging grooves 107 is formed on the outer periphery of the plugging portion 160 at intervals in the axial direction M4 so as to extend in the circumferential direction. Each engaging groove 107 is formed all around the plugging portion 160. As the lock pole 106 moves in its longitudinal direction, the distal end portion protrudes toward the central axis 17 (downward in FIG. 5) beyond the inner periphery of the shaft holder 116, which defines the passage hole 104, to engage with one of the engaging grooves 107 to thereby block movement of the shift select shaft 15 in the axial direction M4. In this way, the shift select shaft 15 is held with a constant force, with its movement in the axial direction M4 blocked.

The inner surface of a side wall 113 of a first housing 22A forms a first inner wall surface 113A that is perpendicular to the bottom face 111A. As shown in FIG. 5, the spline portion 120 and the rack portion 122 are provided at a portion of the shift select shaft 15, which is closer to the distal end (inner side of the housing 22) than the passage hole 104, in this order from the passage hole 104 side. A pinion gear 36 (described later) is in mesh with the rack portion 122. That is, in the shift select shaft 15, the spline portion 120 and the rack portion 122 are located inside the housing 22 at positions apart from the passage hole 104. Particularly, the rack portion 122 is located inside the housing 22 at a position further apart from the passage hole 104 than the spline portion 120. Both the spline portion 120 and the rack portion 122 are cylindrical members coaxially integrated with the shift select shaft 15, and each have a predetermined length in the axial direction. The spline portion 120 and the rack portion 122 are larger in diameter than a shaft portion 15A (a portion of the shift select shaft 15, other than the spline portion 120 and the rack portion 122) of the shift select shaft 15.

Splines 121 (streaky protrusions extending in the axial direction) are formed on the outer periphery of the spline portion 120 over all around the spline portion 120 at intervals in the circumferential direction. A rack teeth forming region 130 is formed on the outer periphery of the rack portion 122 over all around the park portion 122 in the circumferential direction. In the rack teeth forming region 130, a plurality of rack teeth 123 that extend in parallel with one another along the central axis 17 from one end (left end in FIG. 5) of the rack portion 122 to the other end (right end in FIG. 5) of the rack portion 122 in the axial direction M4. The rack teeth 123 in the rack teeth forming region 130 are in mesh with the pinion gear 36 (described later).

A portion of the shift select shaft 15, which is accommodated in the housing 22, is supported by the plain bearing 101 such that the portion is in sliding contact with the plain bearing 101. A distal end portion (left end portion in FIG. 5) of the shift select shaft 15, which is on the opposite side of the rack portion 122 from the spline portion 120, extends through the lid 114 of the housing 22 and protrudes outward from the housing 22. A cylindrical cap 100 is fitted onto the distal end portion via an annular plain bearing 102. The shift select shaft 15 is also supported by the plain bearing 102 such that the shift select shaft 15 is in sliding contact with the plain bearing 102.

As shown in FIG. 4, the switching unit 26 includes a transmission shaft 41, a first rotor 42, a second rotor 44 and a clutch mechanism 39. The transmission shaft 41 is coaxially coupled to the output shaft 40 of the electric motor 23. The first rotor 42 is a rotor that is provided so as to be coaxial with the transmission shaft 41 and rotatable together with the transmission shaft 41. The second rotor 44 is a rotor that is provided so as to be coaxial with the transmission shaft 41 and rotatable together with the transmission shaft 41. The clutch mechanism 39 switches the element, to which the transmission shaft 41 is coupled, between the first rotor 42 and the second rotor 44.

The transmission shaft 41 includes a small-diameter main shaft portion 46 and a large-diameter portion 47. The main shaft portion 46 is provided on the electric motor 23 side. The large-diameter portion 47 is provided integrally with the main shaft portion 46, at an axial end portion (right end portion in FIG. 4), on the first rotor 42 side, of the main shaft portion 46, and is larger in diameter than the main shaft portion 46. The first rotor 42 is arranged on the opposite side (right side in FIG. 4) of the transmission shaft 41 from the electric motor 23. The first rotor 42 has a first armature hub 54 that projects radially outward from the outer periphery of the axial end portion (left end portion in FIG. 4) on the electric motor 23 side. The first armature hub 54 is arranged so as to face the surface (right surface in FIG. 4) of the large-diameter portion 47, which is on the opposite side of the large diameter portion 47 from the electric motor 23.

The second rotor 44 is arranged on the opposite side of the large-diameter portion 47 of the transmission shaft 41 from the first rotor 42, that is, arranged on the electric motor 23 side (left side in FIG. 4). The second rotor 44 surrounds the main shaft portion 46 of the transmission shaft 41 in a non-contact state. The second rotor 44 has a second armature hub 55 that projects radially outward from the outer periphery of the axial end portion (right end portion in FIG. 4), which is on the opposite side of the second rotor 44 from the electric motor 23. The second armature hub 55 is arranged so as to face the surface (left surface in FIG. 4) of the large-diameter portion 47, which is on the electric motor 23 side. In other words, (the first armature hub 54 of) the first rotor 42 and (the second armature hub 55 of) the second rotor 44 are arranged so as to sandwich the large-diameter portion 47 of the transmission shaft 41 therebetween. In this state, the first rotor 42, the second rotor 44 and the transmission shaft 41 are arranged coaxially with one another and each are rotatable about the axis.

The clutch mechanism 39 includes a shift electromagnetic clutch 43 and a select electromagnetic clutch 45. The shift electromagnetic clutch 43 is engaged with or disengaged from the first rotor 42 to couple or disconnect the transmission shaft 41 to or from the first rotor 42. The select electromagnetic clutch 45 is engaged with or disengaged from the second rotor 44 to couple or disconnect the second rotor 44 to or from the transmission shaft 41. The shift electromagnetic clutch 43 is able to transmit the rotational driving force from the electric motor 23 to the first rotor 42 to rotate the first rotor 42. The select electromagnetic clutch 45 is able to transmit the rotational driving force from the electric motor 23 to the second rotor 44 to rotate the second rotor 44.

The shift electromagnetic clutch 43 includes a first field 48 and a first armature 49. The first armature 49 is arranged on the other axial side surface (right surface in FIG. 4) of the large-diameter portion 47 of the transmission shaft 41. The first armature 49 is arranged with a small clearance from the surface (left surface in FIG. 4) of the first armature hub 54, which is on the electric motor 23 side. The first armature 49 has a substantially annular plate shape that is coaxial with the transmission shaft 41. The first armature 49 is a rotary element that rotates together with the transmission shaft 41 (large-diameter portion 47). The first armature 49 is made of a ferromagnetic material, such as iron. The first field 48 is an annular member that includes an annular bobbin 31 and a first electromagnetic coil 50. The bobbin 31 has a U-shape when viewed from the circumferential direction. The first electromagnetic coil 50 is incorporated in the bobbin 31 (inside of the U-shaped portion). The first field 48 is fixed to the housing 22 via a clutch casing 140 (described later).

The select electromagnetic clutch 45 includes a second field 51 and a second armature 52. The second armature 52 is arranged on one axial side surface (left surface in FIG. 4) of the large-diameter portion 47 of the transmission shaft 41. The second armature 52 is arranged with a small clearance from the surface (right surface in FIG. 4) which is on the opposite side of the second armature hub 55 from the electric motor 23. The second armature 52 has a substantially annular plate shape that is coaxial with the transmission shaft 41. The second armature 52 is a rotary element that rotates together with the transmission shaft 41 (large-diameter portion 47). The second armature 52 is made of a ferromagnetic material, such as iron. The second field 51 includes an annular bobbin 32 and a second electromagnetic coil 53. The bobbin 32 has a U-shape in cross section when viewed from the circumferential direction. The second electromagnetic coil 53 is incorporated in the bobbin 32 (inside the U-shaped portion). The second field 51 is an annular member, and is fixed to the housing 22 via the clutch casing 140.

Note that, for each of the shift electromagnetic clutch 43 and the select electromagnetic clutch 45, the clutch casing 140 functions as a core of an electromagnetic actuator in the following manner. A magnetic circuit is formed by a corresponding one of the bobbins (the bobbins 31 and 32) and a corresponding one of the electromagnetic coils (the first electromagnetic coil 50 and the second electromagnetic coil 53). The first field 48 and the second field 51 are arranged next to each other in the axial direction (direction in which the central axes of the first rotor 42, second rotor 44 and transmission shaft 41 extend, and the lateral direction in FIG. 4) with the large-diameter portion 47, the first armature hub 54 and the second armature hub 55 interposed therebetween.

A clutch driving circuit (not shown), which is used to drive the shift electromagnetic clutch 43 and the select electromagnetic clutch 45, is connected to the clutch mechanism 39. An electronic control unit (ECU) 88 and an operation lever 93 are provided in association with the clutch driving circuit. The ECU 88 executes drive control over the electric motor 23 via a motor driver (not shown) on the basis of an automatic shift command based on a predetermined program, an operator's (driver's) operation of the operation lever 93, or the like, and executes drive control over the shift electromagnetic clutch 43 and the select electromagnetic clutch 45 via the clutch driving circuit. The ECU 88 may be fixed to a vehicle body or may be accommodated in the gear housing 7 (see FIG. 1).

The clutch driving circuit is supplied with voltage (supplied with electric power) from a power supply (for example, 24 V, not shown) via a wiring, or the like. The clutch driving circuit is configured to include a relay circuit, and the like. The clutch driving circuit is provided so as to be able to individually supply electric power to or stop supply of electric power to the shift electromagnetic clutch 43 and the select electromagnetic clutch 45. Note that the configuration of the clutch driving circuit is not limited to the configuration for driving both the shift electromagnetic clutch 43 and the select electromagnetic clutch 45. A clutch driving circuit for driving the shift electromagnetic clutch 43 and a clutch driving circuit for driving the select electromagnetic clutch 45 may be separately provided.

When the first electromagnetic coil 50 is energized by supplying electric power to the shift electromagnetic clutch 43 via the clutch driving circuit, the first electromagnetic coil 50 is placed in an excited state. Thus, electromagnetic attraction is generated in the first field 48 that includes the first electromagnetic coil 50. Then, the first armature 49 is attracted to the first field 48 to be deformed toward the first field 48, and the first armature 49 frictionally contacts the first armature hub 54. Thus, when the first electromagnetic coil 50 is energized, the large-diameter portion 47 (of the transmission shaft 41) on the first armature 49 side is connected to the first armature hub 54 (first rotor 42), and the transmission shaft 41 is coupled to the first rotor 42. When supply of voltage to the first electromagnetic coil 50 is stopped and current does not flow through the first electromagnetic coil 50, attraction force for attracting the first armature 49 is no longer generated, so the first armature 49 returns to its original shape. Thus, the shift electromagnetic clutch 43 is switched from the engaged state to the disengaged state, and the transmission shaft 41 is separated (removed) from the first rotor 42. That is, by switching the state of power supply to the first electromagnetic coil 50 between the power supply state and the power supply stopped state, it is possible to switch the shift electromagnetic clutch 43 between the engaged state and the disengaged state. The shift electromagnetic clutch 43 in the engaged state transmits the (rotational) driving force from the electric motor 23 to the shift conversion mechanism 24. The shift electromagnetic clutch 43 in the disengaged state interrupts transmission of the driving force to the shift conversion mechanism 24.

When the second electromagnetic coil 53 is energized by supplying electric power to the select electromagnetic clutch 45 via the clutch driving circuit, the second electromagnetic coil 53 is placed in an excited state. Thus, electromagnetic attraction is generated in the second field 51 that includes the second electromagnetic coil 53. Then, the second armature 52 is attracted to the second field 51 to be deformed toward the second field 51, and the second armature 52 frictionally contacts the second armature hub 55. Thus, when the second electromagnetic coil 53 is energized, the large-diameter portion 47 (of the transmission shaft 41) on the second armature 52 side is connected to the second armature hub 55 (second rotor 44), and the transmission shaft 41 is coupled to the second rotor 44. When supply of voltage to the second electromagnetic coil 53 is stopped and current does not flow through the second electromagnetic coil 53, attraction force for attracting the second armature 52 is no longer generated, so the second armature 52 returns to its original shape. Thus, the select electromagnetic clutch 45 is switched from the engaged state to the disengaged state, and the transmission shaft 41 is separated (removed) from the second rotor 44. That is, by switching the state of power supply to the second electromagnetic coil 53 between the power supply state and the power supply stopped state, it is possible to switch the select electromagnetic clutch 45 between the engaged state and the disengaged state. The select electromagnetic clutch 45 in the engaged state transmits the driving force from the electric motor 23 to the select conversion mechanism 25. The select electromagnetic clutch 45 in the disengaged state interrupts transmission of the driving force to the select conversion mechanism 25.

In control over the electric actuator 21, usually, only one of the shift electromagnetic clutch 43 and the select electromagnetic clutch 45 is selectively engaged. That is, when the shift electromagnetic clutch 43 is engaged, the select electromagnetic clutch 45 is disengaged; whereas, when the select electromagnetic clutch 45 is engaged, the shift electromagnetic clutch 43 is disengaged.

An annular small-diameter first gear 56 is fixedly fitted onto the outer periphery of the second rotor 44. The first gear 56 is provided coaxially with the second rotor 44. The first gear 56 is supported by a rolling bearing 57. An outer ring of the rolling bearing 57 is fixedly fitted onto the inner periphery of the first gear 56. An inner ring of the rolling bearing 57 is fixedly fitted onto the outer periphery of the main shaft portion 46 of the transmission shaft 41. The shift conversion mechanism 24 mainly includes a ball screw mechanism 58, a nut 59, and an arm 60. The ball screw mechanism 58 is a speed reducer that converts a rotational motion into a linear motion. The nut 59 is provided in the ball screw mechanism 58. The arm 60 pivots about the central axis 17 of the shift select shaft 15 as the nut 59 moves in the axial direction.

The ball screw mechanism 58 includes a screw shaft 61 and the nut 59. The screw shaft 61 extends coaxially with the first rotor 42 (i.e., coaxially with the transmission shaft 41). The nut 59 is screwed to the screw shaft 61 via balls (not shown). The screw shaft 61 is arranged so as to be neither parallel to nor intersecting with the shift select shaft 15 such that, when viewed in a plan view (when viewed from above in FIG. 4), the output shaft 40 and the shift select shaft 15 form an angle of 90 degrees. In other words, the screw shaft 61 and the shift select shaft 15 are perpendicular to each other when viewed from a direction that is perpendicular to both the axial direction of the screw shaft 41 and the axial direction M4 of the shift select shaft 15 (when viewed from above in FIG. 4).

The screw shaft 61 is supported by rolling bearings 64, 67 while movement of the screw shaft 61 in the axial direction is restricted. Specifically, one end portion (left end portion in FIG. 4) of the screw shaft 61 is supported by the rolling bearing 64, and the other end portion (right end portion in FIG. 4) of the screw shaft 61 is supported by the rolling bearing 67. The screw shaft 61 is supported by the rolling bearings 64, 67 so as to be rotatable about its central axis 80 (see FIG. 5).

An inner ring of the rolling bearing 64 is fixedly fitted onto one end portion of the screw shaft 61. An outer ring of the rolling bearing 64 is fitted into a through-hole 68 that extends through a fixed plate 65 of the clutch casing (described later) fixed to the housing 22, from the inner surface to the outer surface of the fixed plate 65. In addition, a lock nut 66 is engaged with the outer ring of the rolling bearing 64 to restrict movement of the rolling bearing 64 toward the other side (right side in FIG. 4) in the axial direction of the screw shaft 61. A part of one end portion of the screw shaft 61, which is on the electric motor 23 side (left side in FIG. 4) with respect to the rolling bearing 64, is passed through the inner periphery of the first rotor 42, and is coupled to the first rotor 42 so as to be rotatable together with the first rotor 42. The outer ring of the rolling bearing 67 is fixed to the housing 22.

Columnar protruding shafts 70 are formed to protrude from one side surface of the nut 59 and the other side surface that is on the opposite side of the nut 59 from the one side surface. The protruding shafts 70 extend in the direction along the axial direction M4 of the shift select shaft 15. The one side surface is a side surface closer to the reader in the direction perpendicular to the sheet on which FIG. 4 is drawn, and is a left side surface in FIG. 5. The other side surface is a side surface farther from the reader in the direction perpendicular to the sheet on which FIG. 4 is drawn, and is an right side surface in FIG. 5. The direction along the axial direction M4 is the direction perpendicular to the sheet on which FIG. 4 is drawn. Only one of the protruding shafts 70 is shown in FIG. 4 (also see FIG. 5A). The protruding shafts 70 are coaxial with each other (see FIG. 5). The rotation of the nut 59 about the screw shaft 61 is restricted by a first engaging portion 72 (described later) of the arm 60. Thus, as the screw shaft 61 is rotated, the nut 59 moves in the axial direction of the screw shaft 61 in accordance with the rotation of the screw shaft 61. Note that FIG. 5 shows a sectional state where the nut 59 is located at a position that is deviated from the position of the nut 59 shown in FIG. 4 in a direction away from the first rotor 42 (rightward in FIG. 4) along the axial direction of the screw shaft 61.

As shown in FIG. 4 and FIG. 5, the arm 60 includes the first engaging portion 72, a second engaging portion 73 (see FIG. 5) and a linear connecting rod 74. The first engaging portion 72 engages with the nut 59. The second engaging portion 73 is spline-fitted to the spline portion 120 of the shift select shaft 15. The connecting rod 74 connects the first engaging portion 72 to the second engaging portion 73. The connecting rod 74 has, for example, a rectangular shape in cross section over its entire length. The second engaging portion 73 has a ring shape (annular shape), and is fitted onto the spline portion 120 of the shift select shaft 15. Splines 75 are formed on the inner periphery of the second engaging portion 73. The splines 75 of the second engaging portion 73 are in mesh with the splines 121 of the spline portion 120. In this way, spline-fitting between the second engaging portion 73 and the spline portion 120 is achieved. The second engaging portion 73 has an annular plate shape. Alternatively, the second engaging portion 73 may have a cylindrical shape (a shape having a predetermined thickness in the axial direction).

The first engaging portion 72 has a pair of support plate portions 76 (only one of the support plate portions 74 is shown in FIG. 4) and a coupling plate portion 77. The support plate portions 76 face each other. The coupling plate portion 77 couples the base end sides of the support plate portions 76 to each other. The first engaging portion 72 has a substantially U-shape in side view. Each support plate portion 76 has a U-shaped engaging groove 78. The U-shaped engaging groove 78 is engaged with the outer periphery of a corresponding one of the protruding shafts 70 while allowing rotation of the corresponding one of the protruding shafts 70. Each U-shaped engaging groove 78 is a cutout that extends from the distal end side (upper end side in FIG. 4 and FIG. 5) that is on the opposite side of the first engaging portion 72 from the base end side. Therefore, the first engaging portion 72 is engaged with the nut 59 so as to be rotatable relative to the nut 59 around the protruding shafts 70 and movable together with the nut 59 in the axial direction of the screw shaft 61. In addition, due to engagement of each U-shaped engaging groove 78 and a corresponding one of the protruding shafts 70, rotation of the nut 59 around the screw shaft 61 is restricted by the first engaging portion 72 of the arm 60. Therefore, in accordance with the rotation of the screw shaft 61, the nut 59 and the first engaging portion 72 move in the axial direction of the screw shaft 61.

As described above, the outer periphery of the spline portion 120 of the shift select shaft 15 is spline-fitted to the inner periphery of the second engaging portion 73. Specifically, the splines 121 formed on the outer periphery of the spline portion 120 are in mesh with the splines 75 formed on the inner periphery of the second engaging portion 73. At this time, a clearance for meshing is formed between the splines 121 and the splines 75.

In other words, the second engaging portion 73 is coupled to the outer periphery of the spline portion 120 of the shift select shaft 15 so as to be non-rotatable relative to the shift select shaft 15 and movable relative to the shift select shaft 15 in the axial direction. Therefore, when the shift electromagnetic clutch 43 is engaged, as the screw shaft 61 rotates and, accordingly, the nut 59 moves in the axial direction of the screw shaft 61, the arm 60 pivots about the central axis 17 of the shift select shaft 15. In accordance with the pivot motion of the arm 60, the shift select shaft 15 rotates about the central axis 17. That is, when the spline portion 120 receives the driving force of the electric motor 23 from the second engaging portion 73, the shift select shaft 15 rotates around its axis. In this way, the above-described shift operation is completed.

As shown in FIG. 4, the select conversion mechanism 25 includes the first gear 56, a pinion shaft 95, a second gear 81 and the small-diameter pinion gear 36. The pinion shaft 95 extends parallel to the transmission shaft 41, and is provided so as to be rotatable. The second gear 81 is coaxially fixed to the pinion shaft 95 at a predetermined position close to one end portion (left end portion in FIG. 4) of the pinion shaft 95. The second gear 81 is in mesh with the first gear 56. The pinion gear 36 is coaxially fixed to the pinion shaft 95 at a predetermined position close to the other end portion (right end portion in FIG. 4) of the pinion shaft 95. The select conversion mechanism 25 constitutes a speed reducer as a whole. Note that the second gear 81 is formed to be larger in diameter than both the first gear 56 and the pinion gear 36.

One end portion (left end portion in FIG. 4) of the pinion shaft 95 is supported by a rolling bearing 96 fixed to the housing 22. An inner ring of the rolling bearing 96 is fixedly fitted onto one end portion (left end portion in FIG. 4) of the pinion shaft 95. In addition, an outer ring of the rolling bearing 96 is fixed in a cylindrical recess 97 formed on the inner surface of the lid 27. In addition, the other end portion (right end portion in FIG. 4) of the pinion shaft 95 is supported by a rolling bearing 84. The pinion 36 and the rack portion 122 (see FIG. 5) are in mesh with each other by a rack-and-pinion mechanism. With this configuration, when the select electromagnetic clutch 45 is engaged, as the pinion shaft 95 rotates in accordance with the rotation of the transmission shaft 41, the shift select shaft 15 moves in the axial direction M4 (see FIG. 1) accordingly. That is, when the rack portion 122 receives the driving force of the electric motor 23 from the pinion gear 36, the shift select shaft 15 slides in the axial direction. In this way, the above-described select operation is completed. Note that, even when the shift select shaft 15 slides, spline-fitting between the second engaging portion 73 and the spline portion 120 is maintained.

As shown in FIG. 2, the above-described housing 22 includes the first housing 22A and a second housing 22B. Note that the first housing 22A and the second housing 22B are integrated with each other, and no clearance is present at a joint between the housings. Therefore, the inside and outside of the housing 22 do not communicate with each other through the joint between the first housing 22A and the second housing 22B.

The first housing 22A has a substantially rectangular parallelepiped box shape, and forms the right side portion of the housing 22 in FIG. 2. The first housing 22A mainly accommodates the shift select shaft 15, the ball screw mechanism 58, the arm 60 and the pinion gear 36 (see FIG. 4). The first housing 22A is defined by the above-described bottom wall 111, the side wall 112, the side wall 113, the lid 114 (see FIG. 5), and the like.

The second housing 22B has a hollow cylindrical shape, and extends from the first housing 22A in a direction (toward the left side in FIG. 2) perpendicular to the shift select shaft 15 in plan view. The above-described motor opening portion 13 is formed in an end face of the second housing 22B, which is on the opposite side of the second housing 22B the first housing 22A. The electric motor 23 is attached to the end face on the opposite side of the second housing 22B from the first housing 22A, via the lid 27 (see FIG. 4). As shown in FIG. 4, the above-described switching unit 26, first gear 81, and the like are accommodated in the second housing 22B.

A clutch accommodating portion 141 is integrally formed with the second housing 22B. More specifically, the clutch accommodating portion 141 has a hollow cylindrical shape that is coaxial with the transmission shaft 41. Both axial ends of the clutch accommodating portion 141 are open as opening portions 142 that form circular holes. Part (upper portion in FIG. 4) of the clutch accommodating portion 141 is an outer peripheral wall 143 of the second housing 22B. That is, the clutch accommodating portion 141 is formed so as to be contiguous with the inner periphery of the outer peripheral wall 143, and forms part of the housing 22 (second housing 22B). The clutch accommodating portion 141 is arranged in a space (space above the pinion shaft 95 in FIG. 4) between the inner periphery of the outer peripheral wall 143 and the pinion shaft 95 in the second housing 22B.

The clutch casing 140 (in FIG. 4, a portion indicated by diagonally right down hatching, other than the above-described lid 27) is accommodated in the clutch accommodating portion 141. The overall shape of the clutch casing 140 is a hollow cylindrical shape that is coaxial with the clutch accommodating portion 141. The clutch casing 140 includes a select holding portion 144, a shift holding portion 145 and the above-described fixed plate 65.

The select holding portion 144, the shift holding portion 145 and the fixed plate 65 have ring shapes (annular shapes) having substantially the same outside diameter, and each have a predetermined thickness in the axial direction. The select holding portion 144, the shift holding portion 145 and the fixed plate 65 are arranged in this order from the electric motor 23 side (left side in FIG. 4), and are coaxial with one another. A bent portion 144A is integrally formed with an edge of the select holding portion 144, which is on the electric motor 23 side. The bent portion 144A has an annular shape, and extends radially inward from the edge of the select holding portion 144. A turned-back portion 144B is integrally formed with the inner periphery of the bent portion 144A. The turned-back portion 144B has an annular shape, and extends in the axial direction of the select holding portion 144 from the inner periphery of the bent portion 144A toward the shift holding portion 145 (extends in a direction away from the electric motor 23, and rightward in FIG. 4).

A bent portion 145A is integrally formed with an edge of the shift holding portion 145, which is on the opposite side of the shift holding portion 145 from the electric motor 23 (right side in FIG. 4). The bent portion 145A has an annular shape, and extends radially inward from the edge of the shift holding portion 145. A turned-back portion 145B is integrally formed with the inner periphery of the bent portion 145A. The turned-back portion 145B has an annular shape, and extends in the axial direction of the shift holding portion 145 from the inner periphery of the bent portion 145A toward the select holding portion 144 (extends in a direction toward the electric motor 23, and leftward in FIG. 4). The turned-back portion 144B of the select holding portion 144 has substantially the same diameter as the turned-back portion 145B of the shift holding portion 145.

The fixed plate 65 is a metal sheet thicker than each of the select holding portion 144 and the shift holding portion 145. The above-described through-hole 68 is formed at the central position of the fixed plate 65. Thus, the fixed plate 65 has a ring shape. A projecting portion 65A is integrally formed with an end portion of the inner periphery of the fixed plate 65, which is on the shift holding portion 145 side (left side in FIG. 4). The projecting portion 65A protrudes radially inward.

The select holding portion 144, the shift holding portion 145 and the fixed plate 65 are fixed to each other with, for example, bolts, and constitute the clutch casing 140. An edge (right edge in FIG. 4) of the select holding portion 144, which is on the opposite side of the select holding portion 144 from the bent portion 144A, and an edge (left edge in FIG. 4) of the shift holding portion 145, which is on the opposite side of the shift holding portion 145 from the bent portion 145A, face each other with a clearance X in the axial direction. The fixed plate 65 is connected, with no clearance, to a surface of the bent portion 145A of the shift holding portion 145, which is on the opposite side (right side in FIG. 4) of the bent portion 145A from the select holding portion 144. In this state, a cylindrical space defined by the turned-back portion 144B of the select holding portion 144, a cylindrical space defined by the turned-back portion 145B of the shift holding portion 145 and the through-hole 68 of the fixed plate 65 are coaxial with one another. In the clutch casing 140, the cylindrical space defined by the inner periphery of the turned-back portion 144B of the select holding portion 144 serves as an insertion hole 140A on one side in the axial direction, and the cylindrical space defined by the inner periphery of the turned-back portion 145B of the shift holding portion 145 and the through-hole 68 serve as an insertion hole 140B on the other side in the axial direction. The insertion hole 140A and the insertion hole 140B are in communication with the corresponding opening portions 142 of the clutch accommodating portion 141.

On the inner side of the shift holding portion 145 and the select holding portion 144, the turned-back portion 144B of the select holding portion 144 and the turned-back portion 145B of the shift holding portion 145 face each other with a clearance in the axial direction. On the inner side of the shift holding portion 145 and the select holding portion 144, the second armature hub 55, the large-diameter portion 47 of the transmission shaft 41 and the first armature hub 54 are accommodated in a space between the turned-back portion 144B and the turned-back portion 145B. Therefore, portions (around the first armature 49) of the first armature hub 54 and the large-diameter portion 47, which are connected to or separated from each other, and portions (around the second armature 52) of the second armature hub 55 and the large-diameter portion 47, which are connected to or separated from each other, are accommodated on the (radially and axially) inner side of the shift holding portion 145 and the select holding portion 144 (that is, the clutch casing 140).

The annular second field 51 of the select electromagnetic clutch 45 is fixedly fitted onto the turned-back portion 144B of the select holding portion 144. The annular first field 48 of the shift electromagnetic clutch 43 is fixedly fitted onto the turned-back portion 145B of the shift holding portion 145. In this state, the transmission shaft 41 and the second rotor 44 are inserted into the insertion hole 140A of the select holding portion 144 from the side (right side in FIG. 4) opposite to the bent portion 144A, and the first rotor 42 is inserted into the insertion hole 140B of the shift holding portion 145 from the side (left side in FIG. 4) opposite to the bent portion 145A. Then, the select holding portion 144 and the shift holding portion 145 are arranged such that the above-described clearance X is formed.

The main shaft portion 46 of the transmission shaft 41 and the second rotor 44 (a rotary shaft 90 that is closer to the electric motor 23 than the second armature hub 55) are arranged in (passed through) a space (radially) inward of the turned-back portion 144B of the select holding portion 144 (the above-described insertion hole 140A). The end portion (left end portion in FIG. 4) of each of the main shaft portion 46 and the second rotor 44, the end portion being on the electric motor 23 side, is exposed on the outside (on the left side in FIG. 4) of the clutch accommodating portion 141 so as to extend through the opening portion 142 of the clutch accommodating portion 141, the opening portion 142 being on the electric motor 23 side.

A rolling bearing 147 is fitted in the insertion hole 140A, at a position between the turned-back portion 144B and the second rotor 44. An outer ring of the rolling bearing 147 is press-fitted to the inner periphery of the turned-back portion 144B, and an inner ring of the rolling bearing 147 is press-fitted to the outer periphery of the second rotor 44 (the above-described rotary shaft 90). As a result, the second rotor 44 is rotatably supported by the rolling bearing 147. A stepped portion 44A (a portion of which the outside diameter of the second rotor 44 changes in a stepwise manner) is formed in a portion of the second rotor 44, which is closer to the second armature hub 55 than the rolling bearing 147 (i.e., which is on the right side of the roiling bearing 147 in FIG. 4). The stepped portion 44A contacts the inner ring of the rolling bearing 147. In this way, the rolling bearing 147 is positioned in the axial direction.

The screw shaft 61 and the first rotor 42 (a rotary shaft 91 that is farther from the electric motor 23 than the first armature hub 54) are arranged in (passed through) a space (radially) inward of the turned-back portion 145B of the shift holding portion 145 (the above-described insertion hole 140B). Although the first rotor 42 is accommodated in the clutch casing 140 (more specifically, in the shift holding portion 145), the screw shaft 61 is exposed on the outside (on the right side in FIG. 4) of the clutch accommodating portion 141 so as to extend through the opening portion 142 which is on the opposite side of the clutch accommodating portion 141 from the electric motor 23 (right side in FIG. 4).

A rolling bearing 148 is fitted in the insertion hole 140B, at a position between the turned-back portion 145B and the first rotor 42. An outer ring of the rolling bearing 148 is press-fitted to the inner periphery of the turned-back portion 145B, and an inner ring of the rolling bearing 148 is press-fitted to the outer periphery of the first rotor 45 (the above-described rotary shaft 91). As a result, the first rotor 42 and the screw shaft 61 are rotatably supported by the rolling bearing 148. A stepped portion 42A (a portion of which the outside diameter of the first rotor 42 changes in a stepwise manner) is formed in a portion of the first rotor 42, which is closer to the first armature hub 54 than the rolling bearing 148 (i.e., which is on the left side of the roiling bearing 148 in FIG. 4). The stepped portion 42A contacts the inner ring of the rolling bearing 148 and the projecting portion 65A of the fixed plate 65 contacts the outer ring of the rolling bearing 148 from the side (right side in FIG. 4) opposite to the first armature hub 54. In this way, the rolling bearing 148 is positioned in the axial direction.

Note that the projecting portion 65A contacts the outer ring of the rolling bearing 64 from the first armature hub 54 side. As a result, the above-described rolling bearing 64 is positioned in the axial direction. In order to position the rolling bearing 64, a groove 61A may be formed in the outer periphery of the screw shaft 61 and a snap ring 149 fitted to the groove 61A may be brought into contact with the inner ring of the rolling bearing 64 from the first armature hub 54 side.

As described above, the shift electromagnetic clutch 43 and the select electromagnetic clutch 45 are accommodated in the clutch casing 140 (more specifically, an assembly of the select holding portion 144 and the shift holding portion 145). The select holding portion 144 and the shift holding portion 145 are electrically insulated from each other by providing the above-described clearance X. Therefore, it is possible to prevent occurrence of the situation where due to energization of one of the holding portions 144, 145, the other of the holding portions 144, 145 is energized and, as a result, both the shift electromagnetic clutch 43 and the select electromagnetic clutch 45 are unexpectedly driven.

As described above, the clutch casing 140 is accommodated in the clutch accommodating portion 141. At this time, the outer periphery of the clutch casing 140 (the outer peripheries of the select holding portion 144, shift holding portion 145 and fixed plate 65) faces the inner periphery of the clutch accommodating portion 141 from the radially inner side. In this state, a clearance T is present in the radial direction between the outer periphery of the clutch casing 140 and the inner periphery of the clutch accommodating portion 141.

Positioning grooves 150 are respectively formed on the outer peripheries of the select holding portion 144 and shift holding portion 145. The positioning grooves 150 extend over all around the select holding portion 144 and the shift holding portion 145 in the circumferential direction. O-rings 151 are fitted in the positioning grooves 150. Each O-ring 151 is fitted onto the clutch casing 140, at a position of a corresponding one of the positioning grooves 150, and partially exposed on the outside of the positioning groove 150. A portion of each O-ring 151, which is exposed on the outside of the positioning groove 150, contacts the inner periphery of the clutch accommodating portion 141 along the entire circumference, in the housing 22. In this way, each O-ring 151 is interposed between the housing 22 and the clutch casing 140 (in the above-described clearance T), and the clearance X between the shift holding portion 145 and the select holding portion 144 is shut off from an outside (space outside the clutch accommodating portion 141 in the housing 22).

The rolling bearing 148 arranged between the turned-back portion 145B of the shift holding portion 145 and the first rotor 42 and the rolling bearing 147 arranged between the turned-back portion 144B of the select holding portion 144 and the second rotor 44 each are a sealed bearing (a bearing in which a clearance between an outer ring and an inner ring is axially closed by seals 86 (plate-shaped portions of each bearing, which are blacked out in FIG. 4)). Furthermore, both the rolling bearing 57 fitted onto the main shaft portion 46 of the transmission shaft 41 located radially inward of the second rotor 44 and the rolling bearing 64 arranged between the inner periphery of the fixed plate 65 and the screw shaft 61 are sealed bearings.

Therefore, all the joints (the above-described clearance X) in the clutch casing 140 and the clearances between the clutch casing 140 (the inner peripheries of the above-described insertion holes 140A, 140B) and the rotating members (the transmission shaft 41, the first rotor 42, the second rotor 44 and the screw shaft 61) are hermetically sealed by the seal members in the housing 22, such as the O-rings 151 and the sealed bearings. As a result, the inside and outside of the clutch casing 140 are shut off from each other by the seal members.

As described above, in the electric actuator 21, the select electromagnetic clutch 45 and the shift electromagnetic clutch 43 (hereinafter, collectively referred to as "electromagnetic clutches") are accommodated in the clutch casing 140, and the clutch casing 140 is accommodated in the housing 22. Moreover, the seal members (the O-rings 151 and the sealed bearings) for shutting off the inside and outside of the clutch casing 140 from each other are provided in the housing 22. Thus, even if lubricant from the gear housing 7 (see FIG. 1) flows along the surface of the shift select shaft 15 and enters the housing 22 through the clearance S (see FIG. 5) in the above-described passage hole 104, it is possible to reliably prevent entry of the lubricant (particularly, the lubricant in the form of a mist) into the electromagnetic clutches at multiple stages.

Because the lubricant that has entered the housing 22 is blocked by the O-rings 151 having a simple (low-cost) configuration, the lubricant is prevented from flowing beyond the O-rings 151 and entering the space between the housing 22 and the clutch casing 140 (the clearance T). Therefore, it is possible to prevent entry of the lubricant into the electromagnetic clutches in the clutch casing 140 through the clearance T between the housing 22 and the clutch casing 140. The O-rings 151 are desirably provided at positions as close as possible to the respective axial end portions of the clutch casing 140. In this way, the O-rings 151 are located apart from the clearance X. Therefore, it is possible to reliably prevent the lubricant blocked by the O-rings 151 from reaching the clearance X.

In addition, even if the lubricant attempts to enter the clutch casing 140 through the space between the rotary shaft 90 of the second rotor 44, which is the rotary element in the housing 22, and the turned-pack portion 144, which defines the insertion hole 140A of the clutch casing 140, and the space between the rotary shaft 91 of the first rotor 42, which is the rotary element in the housing 22, and the turned-back portion 145B, which defines the insertion hole 140B of the clutch casing 140, the lubricant is blocked by the sealed bearings that are fitted to the insertion holes and that have a simple (low-cost) configuration. Therefore, the lubricant is not able to flow beyond the seal bearings to enter the clutch casing 140. Thus, it is possible to prevent entry of the lubricant into the electromagnetic clutches in the clutch casing 140 through the spaces between the rotary shafts and the turned-back portions 144, 145 that define the insertion holes 140A, 140B of the clutch casing 140, respectively.

Furthermore, the O-rings 151 are provided so as not to be in sliding contact with the shift select shaft 15 that serves as a movable member, and the sealed bearings are bearings by which the first rotor 42, the second rotor 44, and the like, are rotatably supported. Therefore, no sliding resistance is generated between the O-rings 151 or the sealed bearings, and the shift select shaft 15. Therefore, waste of electric power for driving the electric motor 23 that actuates the shift select shaft 15 is prevented. In addition, the O-rings 151 are not in sliding contact with the shift select shaft 15. Therefore, advanced surface treatment that is applied to the shift select shaft 15 to reduce the sliding resistance between the O-rings 151 and the shift select shaft 15 is no longer necessary. That is, it is possible to prevent entry of the lubricant into the electromagnetic clutches while preventing waste of electric power for driving the electric motor 23 at low cost.

The embodiment of the invention is described above. However, various design changes may be provided within the scope of the matter recited in the claims. For example, although the above-described fixed plate 65 is part of the clutch casing 140, the fixed plate 65 may be regarded as a component different from the clutch casing 140.

## Claims

1. An electric actuator that slides a shift select shaft to which a shift lever is coupled in an axial direction of the shift select shaft to cause the shift lever to perform a select operation, and that rotates the shift select shaft about an axis of the shift select shaft to cause the shift lever to perform a shift operation, comprising:
a housing that accommodates the shift select shaft;
an electric motor that is provided on the housing, and that generates rotational driving force;
a select conversion mechanism that is accommodated in the housing, and that converts the rotational driving force into force for sliding the shift select shaft in the axial direction and then transmits the force to the shift select shaft;
a shift conversion mechanism that is accommodated in the housing, and that converts the rotational driving force into force for rotating the shift select shaft about the axis and then transmits the force to the shift select shaft;
a select electromagnetic clutch that allows or interrupts transmission of the rotational driving force from the electric motor to the select conversion mechanism;
a shift electromagnetic clutch that allows or interrupts transmission of the rotational driving force from the electric motor to the shift conversion mechanism;
a clutch casing that is accommodated in the housing and that accommodates the select electromagnetic clutch and the shift electromagnetic clutch; and
a seal member that is provided in the housing, and that shuts off an inside and an outside of the clutch casing from each other.

2. The electric actuator according to claim 1, wherein the seal member is interposed between the housing and the clutch casing.

3. The electric actuator according to claim 2, wherein the seal member includes an

4. The electric actuator according to any one of claims 1 to 3, further comprising:
a rotary element that rotates upon receiving the rotational driving force from at least one of the select electromagnetic clutch and the shift electromagnetic clutch, wherein
the clutch casing has an insertion hole through which a rotary shaft of the rotary element is passed, and
the seal member includes a sealed bearing that is fitted in the insertion hole and that supports the rotary element such that the rotary element is rotatable.
